# EUROPEAN PATENT APPLICATION

(11) **EP 3 409 924 A1**
(43) Date of publication of application: **05.12.2018**
(21) Application number: 17174219.0
(22) Date of filing: 02.06.2017
(51) Int. Cl.: F02C 7/16

(54) **COOLING SYSTEM AND COOLING METHOD IN A GAS TURBINE**

(71) Applicant: Rolls-Royce Deutschland Ltd & Co KG, 15827 Blankenfelde-Mahlow (DE)
(72) Inventor: GALINDO LOPEZ, Carlos Hannover, 10405 Berlin (DE)
(74) Representative: Maikowski & Ninnemann Patentanwälte Partnerschaft mbB

(57) **Abstract**

The invention relates to a cooling system in a gas turbine, in particular in an aircraft engine, with means (10) for generating an air-cooling-fluid mixture flow (5) and flow guiding means (20) for directing the air - cooling-fluid mixture flow (5) to at least one hot target surface (30) in the gas turbine, with the at least one hot target surface (30) getting into contact with the air - cooling-fluid flow (5) to at least partially evaporate the cooling-fluid in the air - cooling-fluid mixture flow (5). The invention also related to a method for cooling a hot target surface.

## Description

The invention relates to a cooling system gas turbine engine with the features of claim 1 and a cooling method with the features of claim 13.

Thermal management - in particular cooling - is very important in gas turbine engines like e.g., aircraft turbines. Certain parts of the engine are subjected to very high temperatures. Further acting upon the engine are mechanical loads, e.g., through the rotation of a compressor or a turbine. The structure of the engine needs to be maintained within design limits during operations.

One aspect in maintaining the design limits is the active control of the tip clearance, i.e., the distance between the tips of the turbine blades and the surrounding walls. These systems are, e.g., known as ATCC (active tip clearance control systems). The tip clearance is - among other parameters like the radial expansion of the blades - influenced by the cooling of the wall surrounding the blades. The cooling medium can be, e.g., air taken from the bypass region (bypass duct) of the engine which is channeled into the core region of the engine and guided towards the wall to be cooled. Such a system is e.g., described in EP 2 224 099 A2. EP 2 918 787 A1 also describes thermal management systems distributing an air flow within the gas turbine engine.

After the cooling medium flow cools the turbine surrounding walls, it picks heat energy and, with increased temperature, it is guided into the core compartment of the engine, washing (cooling) a number of hardware installed to perform mechanical or electrical functions necessary for the engine. If fuel, electrical or oil systems are installed in the core compartment, then this compartment is a designated fire zone, and the washing flow will perform as coolant, removing flammable vapors and it will mix with the fire extinguishing agent to provide the necessary concentration of fire extinguishing agent. Therefore, in rotary combustion aero engines are conditions in which thermal management and fire extinguishing conditions need to be met without one failing because of the other. The ATCC has a valve which controls the amount of cooling flow.

Certain parts, e.g. hot surfaces of equipment of the engine are subjected to high temperatures which requires an efficient cooling. The hot surfaces can, e.g., occur on hardware devices, such e.g. as electronic equipment or valves installed in the core compartments in an aircraft engine. The heat load can be due to heat of the engine walls such as the combustor outer casing, leakages or insufficient cooling air. A too high heat load can influence the functionality of the hardware. Generally, it is difficult to provide additional amounts of cooling air due to the burden imposed on a fire extinguishing system within the gas turbine engine or due to impact in thrust performance.

This aspect is addressed by a cooling system with the features of claim 1.

A cooling system has means for generating an air - cooling-fluid mixture flow and flow guiding means for directing the air - cooling-fluid mixture flow to at least one hot target surface in the gas turbine, with the at least one hot target surface getting into contact with the air- cooling-fluid flow to at least partially evaporate the cooling fluid in the air- cooling-fluid mixture flow. Therefore, this cooling system uses nucleate boiling (i.e. a two phase air - cooling-fluid system) as means for removing heat from the hot surface. Water is a preferred cooling-fluid. Different suitable cooling fluid other than water can be used, as long the saturation condition is met upon contact of coolant/air mixture onto the hot surface to be cooled.

In one embodiment, the air - cooling-fluid mixture flow is saturated with water or over-saturated with water.

The flow guiding means can in one embodiment comprise a piping system and / or impingement means for directing the air - cooling-fluid mixture flow to the at least one hot target surface. The means for generating the air - cooling-fluid mixture flow can comprise at least one cooling-fluid tank, a valve system and / or and at least one dispensing system, in particular at least one spray nozzle. Such a system can bring e.g. the cooling-fluid spray into contact with a hot surface which is a certain distance away from the cooling-fluid tank. In one embodiment the cooling-fluid tank is positioned in a region within the gas turbine which in operation has a temperature above the freezing point.

In a gas turbine, such as e.g. an aircraft engine, the means for generating the air - cooling-fluid mixture flow and / or the flow guiding means, are thermally coupled with a heat exchanger for heating. Hot parts of the gas turbine can be used to heat some heat transfer medium to keep e.g. the cooling-fluid tank above the freezing temperature at the respective operating conditions.

To e.g. adapt to changing operating conditions, an embodiment of the cooling system comprises a control system to adjust the cooling-fluid content of the air - cooling-fluid mixture flow in dependence of temperature measurements, pressure measurements and / or time measurements. In addition, the control system can e.g. act on the valve system connected to the at least one cooling-fluid tank, on a scoop valve adjusting the flow in the scoop device.

In a further embodiment the direction of the cooling-fluid ejected by the at least one spray nozzle is aligned with the airflow. It is injected into or at an angle to the airflow it is injected into. The angle of injection can be used to adjust the mixing process of air and cooling-fluid.

It is also possible, that the direction of the cooling-fluid ejected by the at least one spray nozzle is directed in an opposite direction to the airflow it is injected into.

In a further embodiment, a sub-flow is diverted from the airflow, the sub-flow being directed towards the at least one hot target surface. The remaining airflow can in particular be used for tip clearance control.

The cooling system can be applied to a hot target surface as a part of a tip clearance control surface, a composite material device or a power gear box. All three items would benefit from cooling.

The issue is also addressed by a method according to claim 13.

Embodiments of the invention are shown in the figures, where
- Fig. 1: shows a schematic cross-sectional view of a part of an aircraft engine with an embodiment of a cooling system;
- Fig. 2: shows a schematic cross-sectional view of a part of an aircraft engine with a further embodiment of the cooling system;
- Fig. 3: shows a schematic cross-sectional view of a further embodiment of the cooling system;
- Fig. 4: shows a schematic cross-sectional view of a part of an aircraft engine with a further embodiment.

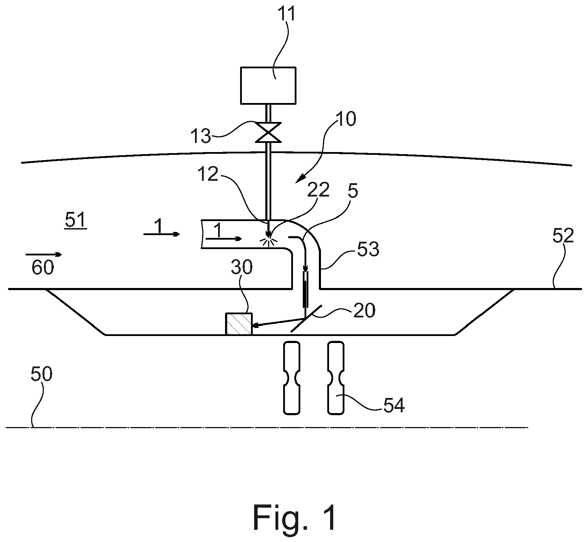

In Fig. 1 a schematic cross-section of a bypass duct 51 surrounding a core region 52 of a turbofan aircraft engine comprising a machine axis 50 is shown.

From the airflow 60 in the bypass duct 51 of the engine a scoop device 53 is channeling an airflow 1 into the core region 52, i.e. an inner part of the engine. That region comprises a compartment with a mixture of air and a flammable fluid and a compartment which is adjacent to blades 54 of a turbine in the engine. The scoop device 53 has in this embodiment e.g. a hook-like shape. Here, only one scoop device is shown but more than one can be used on the engine. Furthermore, the shape of the scoop device 53 can be different in alternative embodiments. The scoop device 53 could also be a NACA scoop, i.e. a low-drag inlet.

The region comprising a mixture of air and a flammable fluid in many cases extends around the engine and it is desirable to keep the concentration of the flammable fluid within design ranges, e.g. by means of ventilating it. However, a fire extinguishing medium to be mixed with air in that region at a prescribed tight concentration rate constrains such ventilation.

The opening of the scoop device 53 points towards the flow direction of the airflow 60 in the bypass duct 51, i.e. towards the front of the aircraft engine. In other embodiments, the scoop device 53 can be formed differently e.g., comprising a slit raised from the core region 52 into the airflow 1 in the bypass duct 51. In any case, a part of the bypass airflow 60 is directed into the core region 52 of the engine.

In the core region 52 of the aircraft engine a hot target surface 30, e.g. from an electronic hardware part, requires cooling. In other alternatives the hot target surface 30 can be e.g. part of a tip clearance control system or a gearbox, such as a power gearbox in geared turbofan engine. Given that composite material devices can comprise temperature sensitive material, those devices can be part of a hot target surface 30 as well.

In the embodiments shown, only one hot target surface 30 is generally shown for reason of simplicity. It is understood that more than one hot target surface 30 can be cooled by the air - cooling-fluid flow (e.g. air - water flow). It is also possible that the shape of the hot target surface 30 is complex.

For this purpose, a cooling systems with means 10 for generating an air - cooling-fluid mixture 5 is provided. In the following embodiments, water is used as cooling-fluid. In alternative embodiments, other cooling-fluids can be used.

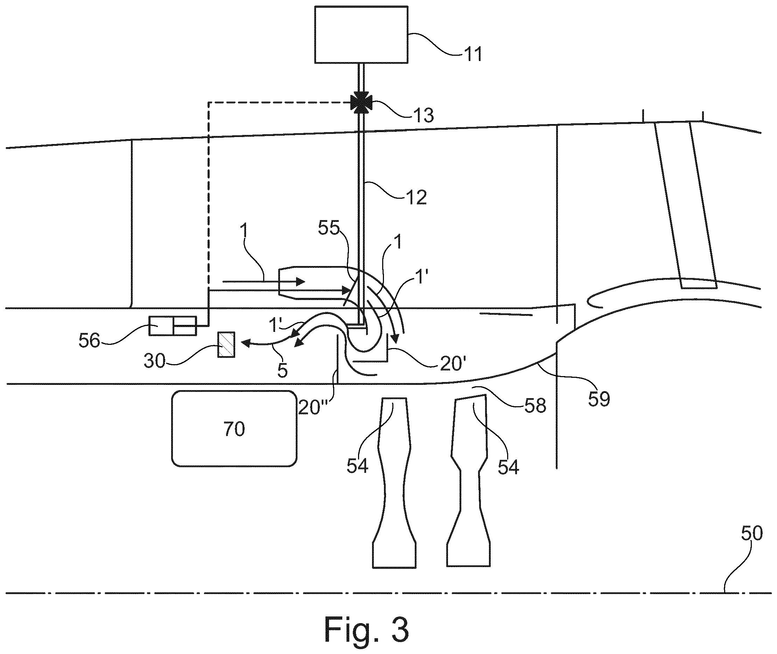

Water is stored in a tank 11 which can be sprayed through a dispensing system, e.g. a spray nozzle 12 into the airflow 1 taken from the bypass duct 51. The spraying of the water flow 2 can be controlled - as will be explained below - e.g. through a valve 13. The angle of the spray nozzle 12 relative to the airflow 1 can be varied. In the depicted embodiment the water flow from the spray nozzle 12 is approximately perpendicular to the airflow 1 within the scoop device 53; i.e. it is not aligned with the airflow 1. In other embodiments, the water flow from the spray nozzle 12 is aligned, i.e. points in essentially the same direction (see e.g. Fig. 3). This way, the water and the air can mix into an air water mixture (i.e. an air - cooling-fluid mixture) is guided towards the hot target surface 30.

Here, for the sake of simplicity, only one water tank 11 and one spray nozzle 12 are shown. In alternative embodiments a plurality of water tanks 11 and / or a plurality of spray nozzles 12 can be used. In addition or alternatively, slots, holes or slotted rings can be used as part of the water dispensing system 12.

As a result, the incoming air 1 is mixed with water spray resulting in an air-water mixture flow 5. The air-water mixture is here a saturated mixture, in particular an over-saturated mixture at the prevalent operating conditions (temperature, pressure).

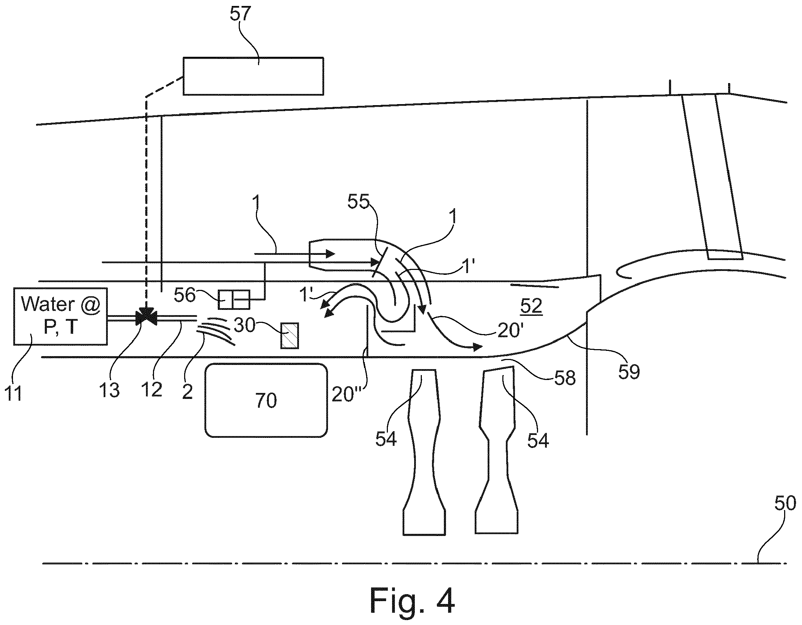

In the depicted embodiment an impingement surface (e.g. a plate at an angle) is used as flow guiding means 20 for directing the air-water mixture flow 5 to at least one hot target surface 30 in the gas turbine. In other embodiments flow guiding means 20 can have multiple parts (see e.g. Fig. 3 or 4) and the shape can be complex.

The hot target surface 30 is e.g. the surface of electronic equipment which must be kept below a certain target temperature. The hot target surface 30 is getting into contact with the air-water flow 5 to at least partially evaporate the water in the air-water mixture flow 5. The evaporation of the water carries away considerable amounts of latent heat from the hot surface.

The use of the air-water mixture flow 5 creates a nucleate cooling or boiling cooling system for core compartment hardware. It improves substantially the cooling for hardware within the core region 52 of an aircraft engine, since it works with two phase flow cooling rather than with single phase cooling. The heat from the hot target surface 30 can be removed by the evaporation heat of the liquid water part in the air-water mixture. This also mitigates high temperature issues of core compartment hardware which are not fuel or oil cooled. But it also mitigates high temperature issues of core compartment hardware cooled also by fuel or oil, in case the cooling by fuel or oil (which is a single phase flow, e.g. forced convection) is not sufficient. The air-water mixtures do not interfere or disturb the requirements to have sufficient concentration of fire extinguisher since it actually behaves as an inert gas which dilutes the mixture of flammable gases, and on top of this, the nucleation cooling system is envisaged not to work during engine windmill, phase in which the fire extinguishing system is activated.

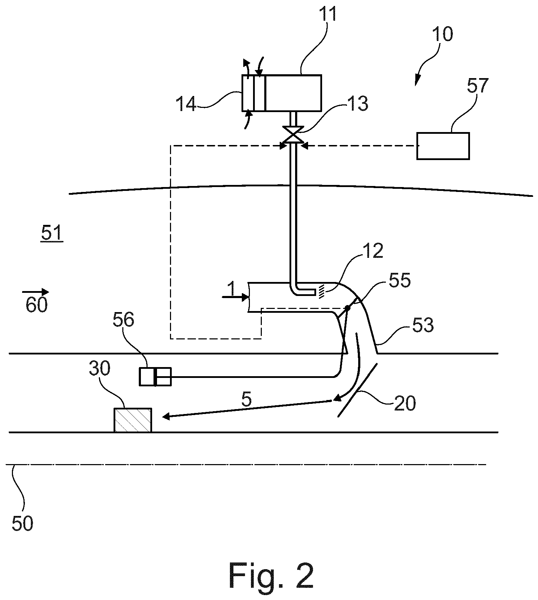

In Fig. 2 a variation of the embodiment shown in Fig. 1 is shown; so reference can be made to the respective description above.

In the embodiment according to Fig. 2 a control system 57 acts on the valve system 13 to control the water flow from the water tank 11 to the spray nozzle 12. Here, the spray nozzle 12 is pointed backwards in the scoop device 53 so that the water spray is directionally aligned with the airflow in the scoop device 53.

The control system 57 is also connected with the scoop valve actuator 56 acting on a scoop valve 55. The scoop valve 55 regulates the flow rate through the scoop device 53.

The control system 57 can also provide thermal and / or pressure control for the water tank 11 so that the sprayed water has the correct temperature and / or pressure so that the air-water mixture 5 is at saturation or oversaturation level.

The nucleate boiling cooling can be controlled to take effect only during certain operating conditions of the aircraft engine.

A control script could e.g. comprise the following steps:

```
 Timer = 0
 IF
       Tambient > limit1 AND
       Thot > limit2 AND / OR N (rotation) > limit3 AND / OR TCCV angle < limit4
 THEN
       Valve OPEN
       TIMER started
 IF
       TIMER > limit5
 THEN
       VALVE close
 ENDIF
       Timer = 0 (reset)
 ENDIF
```

The TCCV is the valve system controlling the scoop valve (valve flap) 55 which is e.g. shown in Fig. 2. It is intended to control the tip clearance in the turbine casing.

In Fig. 3 a further embodiment of the cooling system is shown. The basic setup is the same as shown in Fig. 1 or 2, so reference can be made to the respective description.

The water flow as cooling-fluid is controlled by the valve system 13. The angle of the valve TCCV (tip clearance control valve) is a manipulated variable. Temperatures and the rotational speed can be measured. The temperature can also be used as a controlled parameter.

The incoming air intake 1 is separated into two flows 1, 1'. The flow guiding means 20 comprises here two impingement and guiding surfaces for the free flowing flow 1.

A first guiding means 20' separates the sub-flow 1' from the air intake flow 1 and guides the free flowing sub-flow 1' into a forward direction.

The main flow 1 is guided into an aft direction with the purpose to control a tip clearance 58. In Fig. 4 the tip clearance 58 and a casing 59 of the core region 52 are shown. It is one purpose to adjust the tip clearance 58, i.e. the gap between the blades 54 and the casing 59 in the high pressure turbine region.

The second guiding means 20" guides the free flowing sub-flow 1' radially outwards and then further into the forward direction and the hot target surface 30 which is only shown schematically here. The nucleation cooling system described here mixes a water jet/spray with a relatively cool sub-flow 1'. This is more efficient than a water nozzle 12 inside the duct 53. Also, if the water jet is mixed with the main cooling flow 1 (which has been used tip clearance control purposes), then it is possible that it will first to cool the casing making the cooling of the hot surface 20 less efficient.

In the embodiment shown the water pipe / nozzle with the exiting water flow 2 and the sub-flow 1' aligned (and in the opposite direction to the main core flow direction). Fig. 3 also shows that this cooling is taking place in the vicinity of a combustion chamber 70.

It should be noted that the water is guided intentionally with a piping system into the core region 52, and ideally close to the hot target surface 30, which is not shown here.

In Fig. 4 a variation of the embodiment shown in Fig. 2 or Fig. 3 is shown so that reference can be made to the relevant description above.

Here, the means 10 for generating the air-water mixture flow, in particular the water tank 11, is positioned within the core region 52 of the aircraft engine. The spray nozzles 12 are here positioned opposite to the incoming air flows 1, 1'. The hot target surface 30 is positioned in between so that the water and the air flows 1,1' mix with in the core region 52 and then cool the hot target surface 30.

### List of reference numbers

- 1: air intake from bypass duct
- 1': sub-flow of air-intake flow
- 2: cooling-fluid flow (water flow)
- 5: air - cooling-fluid mixture flow

- 10: means for generating air cooling-fluid mixture flow
- 11: cooling fluid tank
- 12: spray nozzle, cooling fluid dispensing system
- 13: valve system
- 14: heat exchanger

- 20: flow guiding means

- 30: hot target surface

- 50: engine axis
- 51: bypass duct
- 52: core region
- 53: scoop device
- 54: blades
- 55: scoop valve
- 56: scoop valve actuator
- 57: control system
- 58: tip clearance
- 59: casing

- 60: flow in bypass duct

- 70: combustion chamber

## Claims

1. Cooling system in a gas turbine, in particular in an aircraft engine, with means (10) for generating an air - cooling-fluid mixture flow (5) and flow guiding means (20) for directing the air - cooling-fluid mixture flow (5) to at least one hot target surface (30) in the gas turbine, with the at least one hot target surface (30) getting into contact with the air - cooling-fluid flow (5) to at least partially evaporate the cooling-fluid in the air - cooling-fluid mixture flow (5).

2. Cooling system according to claim 1, wherein the air - cooling-fluid mixture flow (5) comprises water as cooling-fluid and is saturated with water or over-saturated with water.

3. Cooling system according to claim 1 or 2, wherein the flow guiding means (20) comprise a piping system and / or impingement means for directing the air - cooling-fluid mixture flow (5) to the at least one hot target surface (30).

4. Cooling system according to at least one of the preceding claims, wherein the means (10) for generating the air- cooling-fluid mixture flow (1) comprises at least one cooling-fluid tank (11), a valve system (13) and / or and at least one dispensing system, in particular at least one spray nozzle (12).

5. Cooling system according to claim 4, wherein the cooling-fluid tank (11) is positioned in a region within the gas turbine which in operation has a temperature above the freezing point.

6. Cooling system according to at least one of the preceding claims, wherein the means (10) for generating the air - cooling-fluid mixture flow (5) and / or the flow guiding means (20), are thermally coupled with a heat exchanger (14) for heating.

7. Cooling system according to at least one of the preceding claims, wherein a control system (57) adjusts the cooling-fluid content of the air - cooling-fluid mixture flow (5) in dependence of temperature measurements, pressure measurements and / or time measurements.

8. Cooling system according to claim 7, wherein the control system (57) acts on the valve system (13) connected to the at least one cooling-fluid tank (11), on a scoop valve (55) adjusting the flow in the scoop device (53).

9. Cooling system according to at least one of the preceding claims, wherein the direction of the cooling-fluid ejected by the at least one spray nozzle (13) is aligned with the airflow (1) it is injected into or at an angle to the airflow (1) it is injected into.

10. Cooling system according to at least one of the claims 1 to 8, wherein the direction of the cooling-fluid ejected by the at least one spray nozzle (13) is directed in an opposite direction to the airflow (1) it is injected.

11. Cooling system according to at least one of the preceding claims, wherein a sub-flow (1') is diverted from the airflow (1), the sub-flow (1') being directed towards the at least one hot target surface (30), the remaining airflow (1) in particular being used for tip clearance control.

12. Cooling system according to at least one of the preceding claims, wherein the hot target surface (30) is part of a tip clearance control surface, composite material device and / or a power gear box.

13. Method for cooling at least one hot target surface (30) in a gas turbine, in particular in an aircraft engine, wherein
a) an air - cooling-fluid mixture flow (5) is generated and
b) flow guiding means (20) are used for directing the air - cooling-fluid mixture flow (5) to at least one hot target surface (30) in the gas turbine, with the at least one hot target surface (30) getting into contact with the air - cooling-fluid flow (5) to at least partially evaporate the cooling-fluid in the air - cooling-fluid mixture flow (5).
